**Europäisches Patentamt**

**European Patent Office**

**Office européen des brevets**

(19)

(11) Veröffentlichungsnummer: **0 163 098 B1**

(12) # EUROPÄISCHE PATENTSCHRIFT

(45) Veröffentlichungstag der Patentschrift:
08.11.89

(51) Int. Cl.⁴: **F 16 K 15/18**, F 15 B 13/01,
G 05 D 7/01

(21) Anmeldenummer: 85104656.5

(22) Anmeldetag: 17.04.85

(54) Senkbremsventil.

(30) Priorität: 30.05.84 DE 3420215
11.01.85 DE 3500735

(43) Veröffentlichungstag der Anmeldung:
04.12.85 Patentblatt 85/49

(45) Bekanntmachung des Hinweises auf die Patenterteilung:
08.11.89 Patentblatt 89/45

(84) Benannte Vertragsstaaten:
DE FR GB SE

(56) Entgegenhaltungen:
GB-A- 721 031
US-A- 3 254 667
US-A- 4 237 922

(73) Patentinhaber: ROBERT BOSCH GMBH, Postfach 50,
D-7000 Stuttgart 1 (DE)

(72) Erfinder: Rasper, Manfred, Ing. grad,
Hummelbergweg 42, D-7250 Leonberg (DE)

## Beschreibung

Stand der Technik

Die Erfindung geht aus von einem Senkbremsventil· nach der Gattung des Hauptanspruchs. Es ist schon ein derartiges Senkbremsventil bekannt, bei dem ein Rückschlagventil im Innern eines Steuerschiebers angeordnet ist. Vom Verbraucher führt ein zweiter Pfad über eine Steuerbohrung und eine einstellbare Meßblende zum Tank zurück. Dies hat den Nachteil, daß sowohl für den Steuerschieber als auch für das Rückschlagventil je eine eigene Feder notwendig ist. Die Meßblende ist parallel zum Steuerschieber in einer zweiten Ebene ausgebildet, wodurch das Senkbremsventil voluminös und sperrig baut.

Aus der Schrift US-A-4 237 922 ist ein Senkbremsventil mit einem in einem Zwischengehäuse geführten Steuerschieber bekannt, der eine veränderbare Drosselstelle steuert. Ferner weist das Zwischengehäuse eine Meßblende auf, deren einstellbarer Drosselkörper am Außenumfang eines Fortsatzes des Zwischengehäuses angeordnet ist. Das Zwischengehäuse dient zugleich auch als Ventilsitz für den Ventilkörper eines Rückschlagventils. Der Ventilkörper und der Steuerschieber sind einstückig ausgebildet. Um einen Druckmittelfluß und eine Wirkverbindung zwischen der Meßblende und der Drosselstelle zu ermöglichen, ist im Ventilkörper-Steuerschieber eine Bohrung ausgebildet. Auch bei diesem Senkbremsventil ist für den Ventilkörper und für den Steuerschieber eine eigene Feder notwendig. Ferner ist für die Funktion ein zusätzliches, in das Hauptgehäuse einschraubbares Zwischengehäuse erforderlich. Das Senkbremsventil baut dadurch aufwendig, voluminös und teuer.

Vorteile der Erfindung

Das erfindungsgemäße Senkbremsventil mit den kennzeichnenden Merkmalen des Hauptanspruchs hat demgegenüber den Vorteil, daß das Rückschlagventil, der Steuerschieber und die Meßblende axial angeordnet sind. Dadurch ist eine kompakte Bauweise möglich. Es ist nur eine Feder notwendig, mit deren Hilfe sowohl der Rückschlagventilkörper belastet ist als auch die Öffnung der Steuerbohrung geregelt wird. Diese Feder stützt sich an einer zur Verstellung der Meßblende dienenden Mutter ab. Dadurch werden gleichzeitig die Größe der Meßblende und die Vorspannung der Feder verändert und somit ein großer Regelbereich möglich. Durch die Patronenbauweise kann das Senkbremsventil leicht in bekannte Aggregate eingebaut werden und hat somit besonders günstige Anwendungsmöglichkeiten.

Durch die in den Unteransprüchen aufgeführten Maßnahmen sind vorteilhafte Weiterbildungen und Verbesserungen der im Hauptanspruch angegebenen Merkmale möglich.

Insbesondere nach Anspruch 9 und 10 ist es möglich, daß die Steuerbohrung des Senkbremsventils erst mit einem gewissen Verzögerungseffekt geöffnet wird. Dadurch wird bei Anheben des Zylinders aus einer beliebigen Mittelstellung ein Absinken des Zylinders solange verhindert, bis die Pumpe genügend Druckmittel liefert, um den Zylinderr weiter anzuheben.

Ferner ist es nach den Ansprüchen 11 bis 15 möglich, daß das Senkbremsventil eine bei steigendem Druck abnehmende Rückflußmenge des abströmenden Druckmittels ermöglicht. Dadurch kann das Senkbremsventil in einer Bypaßschaltung dafür sorgen, daß der Verbraucher bei verschiedenen Drücken mit der gleichen Geschwindigkeit gesteuert werden kann, obwohl bei steigendem Druck die Fördermenge der Elektro-Hydropumpe abnimmt, und ferner die vom Senkbremsventil durch die Bypaßschaltung in den Rücklauf abgeführte Druckmittelmenge ebenfalls kleiner wird. Um eine stets gleichbleibende Hubgeschwindigkeit zu erhalten, muß die Rückflußmenge durch das Senkbremsventil der jeweiligen Fördermenge der Förderpumpe angepaßt sein und dieser entsprechen.

Zeichnung

Ausführungsbeispiele der Erfindung sind in der Zeichnung dargestellt und in der nachfolgenden Beschreibung näher erläutert. Es zeigen Fig. 1 einen Längsschnitt durch ein Senkbremsventil, Fig. 2 einen Längsschnitt durch ein zweites Ausführungsbeispiel und Fig. 3 einen Längsschnitt durch ein drittes Ausführungsbeispiel.

Beschreibung der Ausführungsbeispiele

In einem rohrförmigen Gehäuse 10 eines Senkbremsventils 11 ist nahe seinem einen Ende eine Sicke 12 eingerollt. Diese bildet einen Ventilsitz 13 für einen im Innern 14 des Gehäuses 10 angeordneten becherförmigen Ventilkörper 15' mit Schließkegel 15″ eines Rückschlagventils 15. In dessen Mantel 16 ist kurz vor dem Boden 17 eine durchgehende Querbohrung 18 ausgebildet. Außen am Mantel 16 befindet sich hinter der Querbohrung 18 eine Schräge 19, die dem Ventilsitz 13 zugeordnet ist.

Im Innern 20 des Ventilkörpers 15' ist ein Steuerschieber 21 gleitend geführt, der eine mittige Sackbohrung 22 und in deren Bohrungsgrund 23 eine als Meßblende 24 dienende Querbohrung aufweist. Die Sackbohrung 22 erstreckt sich vom Boden 17 des Ventilkörpers 15' aus. Die dem Boden 17 zugewandte Kante des Steuerschiebers 21 dient als Steuerkante 25. Diese und die Querbohrung 18 bilden eine veränderliche Drosselstelle 26. Der Abschnitt 27 des Steuerschiebers 21 ist teilweise in einem im Gehäuse 10 angeordneten Führungsteil 28 geführt. Er hat einen kleineren Durchmesser und weist eine kegelige Druckfläche 29 auf. Im Abschnitt 27 ist ein Schlitz 30 ausgebildet, in dem ein von außen bedienbares Verstellelement 31 eingreift. Hinter der Meßblende 24 ist eine Mutter 32 auf dem Steuerschieber 21 aufgeschraubt. An die Mutter 32 legt sich das eine Ende einer Druckfeder 33 an, deren anderes Ende an einer am Ventilkörper 15' ausgebildeten Schulter 34 aufliegt. In der Mutter 32 ist eine Bohrung 35 ausgebildet, in die ein Führungsbolzen 36 eingepreßt ist, der in eine im Führungsteil 28 ausgebildete Bohrung 37 ragt und so die Mutter 32 am Verdrehen hindert.

Nach dem Ventilsitz 13 ist im Gehäuse 10 eine erste Querbohrung 38 und im Bereich der Meßblende 24 eine zweite Querbohrung 39 ausgebildet. Beide Querbohrungen 38, 39 sind außerhalb des Gehäuses 10 verbunden und führen zu einem nicht dargestellten Verbraucher.

Mit Hilfe der Mutter 32 kann der Querschnitt der Meßblende 24 verändert werden. Dazu wird der Steuerschieber 21 mit Hilfe des Verstellelements 31 in die Mutter 32 hineingeschraubt, so daß der Querschnitt der Meßblende 24 verkleinert wird. Dadurch wird der Steuerschieber 21 in Richtung zur Querbohrung 18 im Ventilkörper 15′ hin bewegt, so daß der Weg a zwischen Steuerkante 25 und Querbohrung 18 kleiner wird. Da die Mutter 32 in ihrer Position verbleibt, wird die Spannung der Druckfeder 33 nicht verändert. Da aber der Weg a geringer wird, überstreicht die Steuerkante 25 bereits bei einem geringeren Druck die Querbohrung 18. Indirekt wird dadurch die Spannung der Druckfeder 33 verändert, in diesem Fall verringert.

Strömt nun Druckmittel durch die Querbohrungen 38 und 39 aus dem Verbraucher über die Meßblende 24 in die Sackbohrung 22 des Steuerschiebers 21, so wird es an der Meßblende 24 angedrosselt. Der Druck vor der Meßblende 24 wirkt auf die Druckfläche 29 und verschiebt den Steuerschieber 21 entgegen der Kraft der Druckfeder 33 zum Ventilkörper 15′ hin, da der Druck hinter der Meßblende 24 fällt. Die Größe des Druckabfalls ist davon abhängig, wie weit die Mutter 32 die Meßblende 24 überdeckt.

Das Druckmittel strömt aus der Sackbohrung 22 des Steuerschiebers 21 über die Steuerkante 25 in die Querbohrung 18 zum Tank ab. Die durch die Steuerkante 25 und die Querbohrung 18 gebildete veränderliche Drosselstelle 26 verändert sich automatisch, sobald die Druckdifferenzschwankungen an der Meßblende 24 auftreten, da sich der Druck an der Druckfläche 29 verändert. Diese Druckschwankungen werden durch die Drosselstelle 26 sofort korrigiert, und der Durchflußstrom durch die Messblende 24 bleibt konstant. Die Größe des Durchflußstroms wird von außen durch die Meßblende 24 eingestellt.

Strömt das Druckmittel in umgekehrter Richtung vom Tank zum Verbraucher über das Senkbremsventil 11, so soll der Durchfluß nicht behindert sein. Der Druck des Druckmittels hebt den Ventilkörper 15′ des Rückschlagventils 15 entgegen der Kraft der Druckfeder 33 von seinem Ventilsitz 13 ab. Die Öffnung der Meßblende 24 bleibt dabei unverändert. Das Druckmittel fließt ungedrosselt durch das Innere 14 des Senkbremsventils 11 über die Querbohrungen 38, 39 zum nicht dargestellten Verbraucher.

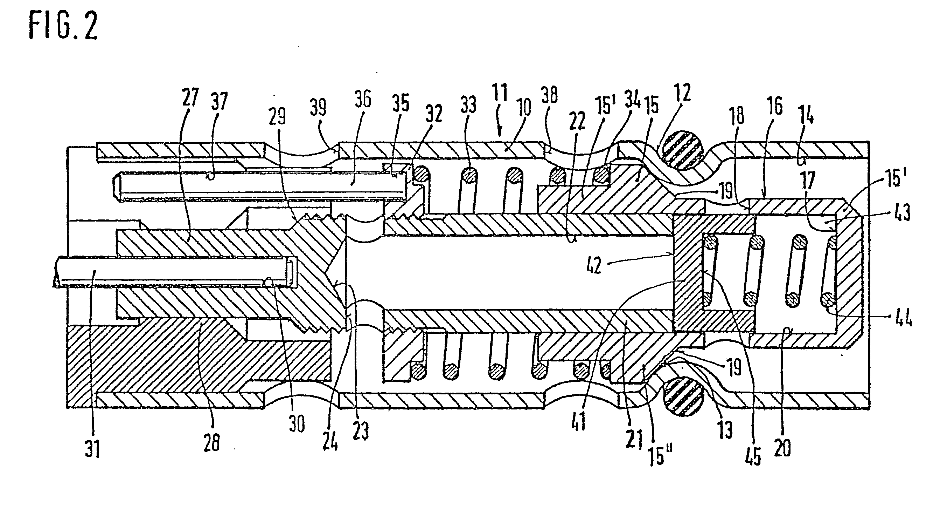

Beim Ausführungsbeispiel nach Fig. 2 sind entsprechende Bauteile wie zuvor wieder mit gleichen Ziffern bezeichnet. Zusätzlich ist im Innern 20 des Ventilkörpers 15′ im Bereich der Querbohrung 18 ein topfförmiger Bremskolben 41 mit etwas Spiel geführt. Mit seiner Vorderseite 42 liegt er an der Steuerkante 25 des Steuerschiebers 21 an. In einem Raum 43 zwischen Bremskolben 41 und Boden 17 des Ventilkörpers 15′ ist eine Druckfeder 44 angeordnet, die sich mit ihrem einen Ende am Boden 17 und mit ihrem anderen Ende am Boden 45 des Bremskolbens 41 anlegt.

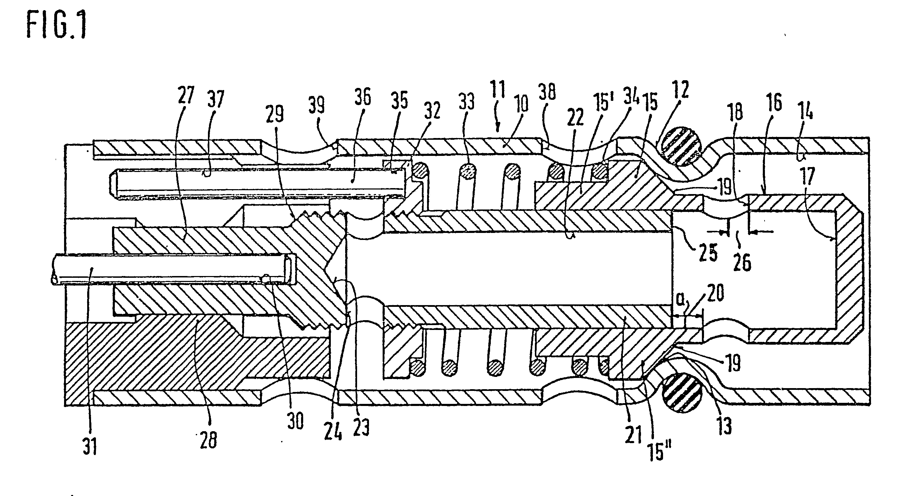

Strömt das Druckmittel – wie bereits beim Ausführungsbeispiel nach Fig. 1 beschrieben – vom Verbraucher über die Querbohrung 39 und die Meßblende 24 in die Sackbohrung 22 des Steuerschiebers 21, so baut sich am Bremskolben 41 ein Druck auf. Dieser verschiebt den Bremskolben 41 entgegen der Kraft der Druckfeder 44 zum Boden 17 hin. Das sich im Raum 43 befindende Druckmittel kann über das Spiel des Bremskolbens 41 und die Querbohrung 18 entweichen, bis die Vorderseite 42 des Bremskolbens 41 die Querbohrung 18 öffnet. Nun erst beginnt der eigentliche Senkvorgang des Verbrauchers. Das Druckmittel strömt – wie oben beschrieben – über die geöffnete Querbohrung 18 und die Drosselstelle 26 ab.

Mit Hilfe des Bremskolbens 41 kann der Beginn des Senkvorgangs des Verbrauchers verzögert werden. Dies ist bei einigen speziellen Anwendungsfällen notwendig, wenn zum Beispiel der Verbraucher aus einer Mittelstellung weiter angehoben werden soll. Die von einem Elektromotor angetriebene Hydropumpe liefert erst mit einiger Verzögerung genügend Druckmittel, so daß während dieser Zeit der Verbraucher absinken kann. Durch den Verzögerungseffekt des Bremszylinders 41 wird diese Unfallgefahr behoben. Der Verzögerungseffekt ist abhängig von der Kraft der Druckfeder 44 und ist auf den der Hydropumpe abgestimmt.

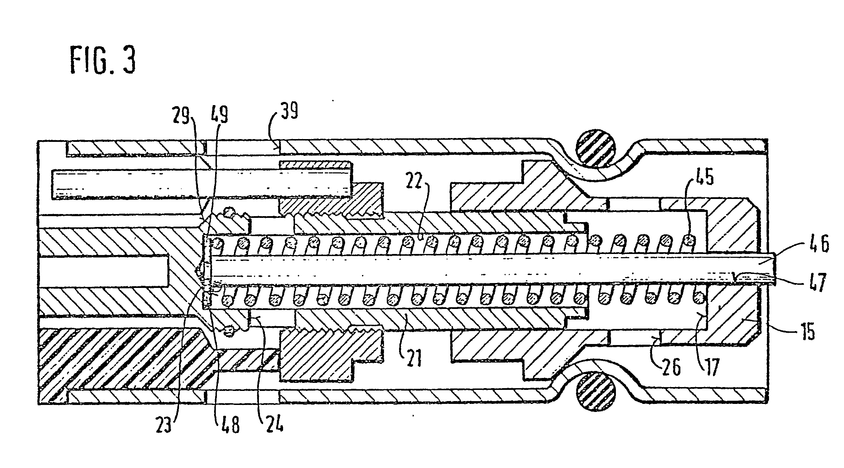

Beim Ausführungsbeispiel nach Fig. 3 sind entsprechende Bauteile wie beim Ausführungsbeispiel nach Fig. 1 wieder mit gleichen Ziffern bezeichnet. Die Druckfeder 33 fehlt und ist durch eine in der Sackbohrung 22 des Steuerschiebers 21 angeordnete Druckfeder 45 ersetzt. Die Druckfeder 45 befindet sich zwischen einem Belastungskolben 46 und der Sackbohrung 22 des Steuerschiebers 21, der gleitend in eine etwa mittige Bohrung 47 im Boden 17 des Rückschlagventils 15 ragt. Am dem Boden 17 abgewandten Ende des Belastungskolbens 46 ist ein Federteller 48 angenietet, der an seinem Außenumfang einen Schlitz 49 aufweist. Es ist aber auch möglich, daß der Federteller 48 zum Beispiel mit Spiel in der Sackbohrung 22 angeordnet ist. An den Federteller 48 legt sich die Druckfeder 45 mit ihrem einen Ende an, während ihr anderes Ende am Boden 17 des Rückschlagventils 15 anliegt. Der Belastungskolben 46 ist somit durch die Kraft der Druckfeder 45 mit dem Federteller 48 gegen den Bohrungsgrund 23 der Sackbohrung 22 gedrückt.

Strömt das Druckmittel – wie bereits beim Ausführungsbeispiel nach Fig. 1 beschrieben – vom Verbraucher über die Querbohrung 39 und die Meßblende 24 in die Sackbohrung 22 des Steuerschiebers 21, so fließt es auch über den Schlitz 49 in den Raum zwischen dem Bohrungsgrund 23 und dem Federteller 48. Der sich dort aufbauende Druck verschiebt den Belastungskolben 46 gegen die Kraft der Druckfeder 45 (in der Zeichnung nach rechts) zum Boden 17 hin. Dadurch wird die Kraft der Druckfeder 45 auf den Steuerschieber 21 entsprechend dem an der Stirnfläche des Belastungskolbens 46 wirkenden Druck verringert. Je größer dieser Druck ist, desto mehr ist der Steuerschieber 21 entlastet. Ferner wirkt der an der Meßblende 24 abfallende, mengenabhängige Druck – wie bereits oben beschrieben – auf die Druckfläche 29 des Steuerschiebers 21 und verschiebt diesen gegen die Kraft der Druckfeder 45 zum Ventilkörper 15′ hin. Die beiden Drücke, der auf die Druckfläche 29 und der auf die Stirnfläche des Belastungskolbens 46 wirkende Druck, überlagern sich somit. Je größer deshalb der auf den Belastungskolben 46 wirksame Druck ist, desto mehr ist der Steuerschieber 21 entlastet und desto mehr wird bei gleichem Druck auf die Druckfläche 29 die veränderliche Drosselstelle 26 überdeckt, das heißt die Drosselstelle 26 wird schneller überdeckt als es im Ausführungsbeispiel nach Fig. 1 der Fall ist. Je größer der Druck auf den Belastungskolben 46 ist, desto geringer ist die über die veränderliche Drosselstelle 26 abströmende Druckmittelmenge. Abhängig von der wirksamen Druckfläche des Belastungskolbens 46 und von der Federkonstanten der Druckfeder 45 kann die Entlastung des Steuerschiebers 21 beeinflußt werden. Die Durchflußmenge des Druckmittels durch die Drosselstelle 26 nimmt somit bei steigendem Druck ab. Dadurch kann das Senkbremsventil 11 dem Förderverhalten einer nicht dargestellten Pumpe angepaßt werden. Da bei steigendem Druck am Verbraucher die Fördermenge der Pumpe abnimmt, muß entsprechend die durch das Senkbremsventil abströmende Druckmittelmenge ebenfalls abnehmen.

## Patentansprüche

1. Senkbremsventil (11) mit einem in einem Gehäuse (10) angeordneten, teilweise hohl ausgebildeten Steuerschieber (21), der eine veränderbare Drosselstelle (26) steuert, sowie einer in Reihe hierzu befindlichen Meßblende (24) mit einem einstellbaren Drosselkörper (32), sowie mit einem Rückschlagventil (15), das einen durch eine Feder (33) belasteten und axial zum Steuerschieber (21) angeordneten Ventilkörper (15') aufweist und das bei zu einem Verbraucher fließenden Druckmittel von einem Ventilsitz (13) abhebt, während bei Rückstrom des Druckmittels vom Verbraucher zu einem Tank die Drosselstelle (26) und die Meßblende (24) wirksam sind, dadurch gekennzeichnet, daß der Steuerschieber (21) im Ventilkörper (15') geführt ist, daß der Drosselkörper (32) am Außenumfang des Steuerschiebers (21) angeordnet ist, der in Wirkverbindung mit der im Steuerschieber (21) ausgebildeten Meßblende (24) steht, und daß sich im Ventilkörper (15') eine Querbohrung (18) befindet, die in Wirkverbindung mit einer Steuerkante (25) des Steuerschiebers (21) steht.

2. Senkbremsventil nach Anspruch 1, dadurch gekennzeichnet, daß der Ventilkörper (15') des Rückschlagventils (15) topfförmig ausgebildet ist und am Mantel (16) eine Schräge (19) aufweist und daß im Ventilkörper (15') zwischen Schräge (19) und Boden (17) die Querbohrung (18) ausgebildet ist.

3. Senkbremsventil nach Anspruch 1 und/oder 2, dadurch gekennzeichnet, daß im Steuerschieber (21) vom Ventilkörper (15') her eine Sackbohrung (22) ausgebildet ist, in deren Bohrungsgrund (23) sich die Meßblende (24) befindet.

4. Senkbremsventil nach einem der Ansprüche 1 bis 3, dadurch gekennzeichnet, daß die Feder (33) mit ihrem einen Ende am Ventilkörper (15') und mit ihrem anderen Ende am Drosselkörper (32) anliegt.

5. Senkbremsventil nach einem der Ansprüche 1 bis 4, dadurch gekennzeichnet, daß der Drosselkörper eine auf dem Steuerschieber (21) aufschraubbare Mutter (32) ist, die durch einen Bolzen (36) verdrehsicher angeordnet ist.

6. Senkbremsventil nach einem der Ansprüche 1 bis 5, dadurch gekennzeichnet, daß das Gehäuse (10) rohrförmig ausgebildet ist.

7. Senkbremsventil nach einem der Ansprüche 1 bis 6, dadurch gekennzeichnet, daß am Gehäuse (10) eine Sicke (12) eingerollt ist, die im Innern (14) den Ventilsitz (13) für den Ventilkörper (15') bildet.

8. Senkbremsventil nach einem der Ansprüche 1 bis 7, dadurch gekennzeichnet, daß der Steuerschieber (21) von außen durch ein Verstellelement (31) verstellbar ist.

9. Senkbremsventil nach einem der Ansprüche 1 bis 8, dadurch gekennzeichnet, daß im Innern (20) des Ventilkörpers (15') ein die Querbohrung (18) steuernder Kolben (41) mit Spiel geführt ist.

10. Senkbremsventil nach Anspruch 9, dadurch gekennzeichnet, daß der Kolben (41) von einer Feder (44) belastet ist.

11. Senkbremsventil nach einem der Ansprüche 1 bis 3 und 5 bis 8, dadurch gekennzeichnet, daß in der Sackbohrung (22) des Steuerschiebers (21) eine Druckfeder (45) angeordnet ist, die am Boden (17) des Ventilkörpers (15') anliegt und den Steuerschieber (21) belastet.

12. Senkbremsventil nach Anspruch 11, dadurch gekennzeichnet, daß die Druckfeder (45) an einem Kolben (46) angeordnet ist und daß sich die Druckfeder (45) mit ihrem einen Ende an einem am Kolben (46) angeordneten Federteller (48) anlegt und mit ihrem anderen Ende am Boden (17) des Ventilkörpers (15') anliegt.

13. Senkbremsventil nach Anspruch 12, dadurch gekennzeichnet, daß der Federteller (48) an seinem Außenumfang einen Schlitz (49) aufweist.

14. Senkbremsventil nach Anspruch 12 und/oder 13, dadurch gekennzeichnet, daß der Federteller (48) mit Spiel in der Sackbohrung (22) des Steuerschiebers (21) geführt ist.

15. Senkbremsventil nach einem der Ansprüche 11 bis 14, dadurch gekennzeichnet, daß der Kolben (46) in einer Bohrung (47) im Boden (17) des Ventilkörpers (15') geführt ist, und daß die dem Kolben (46) zugeordnete Druckfeder (45) mit einer am Kolben (46) wirkenden Kraft auf die Kolbenfläche und mit dem in der Sackbohrung (22) des Steuerschiebers (21) herrschenden Druck im Gleichgewicht steht.

## Claims

1. Valve (11) for a load-lowering brake, having a control slide (21) which is arranged in a housing (10), is of partially hollow design and controls a variable throttling point (26), and a restrictor (24) situated in series thereto, with an adjustable throttling body (32), and having a nonreturn valve (15) which has a valve body (15') stressed by a spring (33) and arranged axially to the control slide (21) and which, in the case of pressure medium flowing to a load, lifts from a valve seat (13), whereas, in the case of return flow of the pressure medium from the load to a tank, the throttling point (26) and the restrictor (24) are effective, characterized in that the control slide (21) is guided in the valve body (15'), in that the throttling body (32) is arranged on the outer periphery to the control slide (21), which is in operative connection with the restrictor (24) formed in the control slide (21), and in that in the valve body (15') there is a transverse bore (18) which is in operative connection with a control edge (25) of the control slide (21).

2. Valve according to claim 1 for a load-lowering brake, characterized in that the valve body (15') of the nonreturn valve (15) is of pot-shaped design and has a bevel (19) on the shell (16) and in that the transverse bore (18) is formed in the valve body (15') between bevel (19) and base (17).

3. Valve according to claim 1 and/or 2 for a load-lowering brake, characterized in that a blind bore (22), in whose bore bottom (23) the restrictor is situated (24), is formed in the control slide (21) from the direction of the valve body (15').

4. Valve according to one of claims 1 to 3 for a load-lowering brake, characterized in that the spring (33) rests by one end against the valve body (15') and by its other end against the throttling body (32).

5. Valve according to one of claims 1 to 4 for a load-lowering brake, characterized in that the throttling body is a nut (32) which can be screwed onto the control slide (21) and is arranged in a manner secure against rotation by virtue of a pin (36).

6. Valve according to one of claims 1 to 5 for a load-lowering brake, characterized in that the housing (10) is of tubular design.

7. Valve according to one of claims 1 to 6 for a load-lowering brake, characterized in that a bead (12) which in the interior (14) forms the valve seat (13) for the valve body (15') is rolled into the housing (10).

8. Valve according to one of claims 1 to 7 for a load-lowering brake, characterized in that the control slide (21) can be adjusted from outside by means of an adjusting element (31).

9. Valve according to one of claims 1 to 8 for a load-lowering brake, characterized in that a piston (41) controlling the transverse bore (18) is guided with play in the interior (20) of the valve body (15').

10. Valve according to claim 9 for a load-lowering brake, characterized in that the piston (41) is loaded by a spring (44).

11. Valve according to one of claims 1 to 3 and 5 to 8 for a load-lowering brake, characterized in that a compression spring (45) which rests against the base (17) of the valve body (15') and stresses the control slide (21) is arranged in the blind bore (22) of the control slide (21).

12. Valve according to claim 11 for a load-lowering brake, characterized in that the compression spring (45) is arranged on a piston (46) and in that the compression spring (45) rests by one end on a spring plate (48) arranged on the piston (46) and rests by its other end against the base (17) of the valve body (15').

13. Valve according to claim 12 for a load-lowering brake, characterized in that the spring plate (48) has a slot (49) on its outer periphery.

14. Valve according to claim 12 and/or 13 for a load-lowering brake characterized in that the spring plate (48) is guided with play in the blind bore (22) of the control slide (21).

15. Valve according to one of claims 11 to 14 for a load-lowering brake, characterized in that the piston (46) is guided in a bore (47) in the base (17) of the valve body (15'), and in that the compression spring (45) associated with the piston (46) is in equilibrium with a force acting on the piston (46), on the piston face, and with the pressure prevailing in the blind bore (22) of the control slide (21).

**Revendications**

1. Soupape à descente freinée (11) avec un tiroir de commande (21), comportant en partie une cavité, disposé dans un carter (10), qui commande un endroit d'étranglement (26) modifiable, ainsi qu'un diaphragme de mesure (24) disposé en série, avec un élément d'étranglement (32) réglable, et une soupape anti-retour (15), qui présente un corps de soupape (15') chargé par un ressort (33) et disposé axialement par rapport au tiroir de commande (21) et qui est soulevé d'un siège de soupape (13) au passage d'un fluide de pression s'écoulant vers un consommateur, tandis que, lors du reflux du fluide de pression dans un réservoir, l'endroit d'étranglement (26) et le diaphragme de mesure (24) interviennent, caractérisée en ce que le tiroir de commande (21) est guidé dans le corps de soupape (15'), de telle sorte que l'élément d'étranglement (32) est guidé sur le pourtour extérieur du tiroir de commande (21), qui se tient en liaison active avec le diaphragme de mesure (24) constitué dans le tiroir de commande (21) et en ce qu'il se trouve dans le corps de soupape (15') un alésage transversal (18) qui se tient en liaison active avec un bord de commande (25) du tiroir de commande (21).

2. Soupape à descente freinée selon la revendication 1, caractérisée en ce que le corps (15') de la soupape de retenue (15) est constitué en forme de pot et présente sur l'enveloppe une obliquité (19) et en ce que l'alésage transversal (18) est constitué dans le corps de soupape (15') entre l'obliquité (19) et la base (17).

3. Soupape à descente freinée selon la revendication 1, et/ou 2, caractérisée en ce qu'il est constitué dans le tiroir de commande (21) du corps de soupape (15') un alésage borgne (22), dans le fond (23) de l'alésage duquel se trouve le diaphragme de mesure (24).

4. Soupape à descente freinée selon l'une des revendications 1 à 3, caractérisée en ce que le ressort (33) s'appuie par une de ses extrémités sur le corps de soupape (15') et par son autre extrémité sur l'élément d'étranglement (32).

5. Soupape à descente freinée selon l'une des revendications 1 à 4, caractérisée en ce que l'élément d'étranglement est un écrou (32) vissable sur le tiroir de commande (21) que la disposition d'une broche (36) assure contre la rotation.

6. Soupape à descente freinée selon l'une des revendications 1 à 5, caractérisée en ce que le carter (10) est réalisé sous une forme tubulaire.

7. Soupape à descente freinée selon l'une des revendications 1 à 6, caractérisée en ce qu'il est aménagé sur le carter (10) une moulure (12), qui constitue, à l'intérieur (14), le siège de soupape (13) du corps de soupape (15').

8. Soupape à descente freinée selon l'une des revendications 1 à 7, caractérisée en ce que le tiroir de commande (21) peut être réglé de l'extérieur par un élément de réglage (31).

9. Soupape à descente freinée selon l'une des revendications 1 à 8, caractérisé en ce qu'à l'intérieur (20) du corps de soupape (15′), un piston (41) commandant l'alésage transversal est guidé avec du jeu.

10. Soupape à descente freinée selon la revendication 9, caractérisée en ce que le piston (41) est chargé par un ressort (44).

11. Soupape à descente freinée selon l'une des revendications 1 à 3 et 3 à 5, caractérisée en ce qu'il est disposé dans l'alésage borgne (22) du tiroir de commande (21) un ressort de pression qui s'appuie sur la base (17) du corps de soupape (15′) et charge le tiroir de commande (21).

12. Soupape à descente freinée selon la revendication 11, caractérisée en ce que le ressort de pression (45) est disposé sur un piston (46) et en ce que le ressort de pression (45) s'appuie par une de ses extrémités sur une cuvette de ressort (48) disposée sur le piston (46) et s'applique par son autre extrémité sur la base (17) du corps de soupape (15′).

13. Soupape à descente freinée selon la revendication 12, caractérisée en ce que la cuvette de ressort (48) présente une fente (49) sur son pourtour extérieur.

14. Soupape à descente freinée selon la revendication 12 ou 13, caractérisée en ce que la cuvette de ressort (48) est guidée avec du jeu dans l'alésage borgne (22) du tiroir de commande (21).

15. Soupape à descente freinée selon l'une des revendications 11 à 14, caractérisée en ce que le piston (46) est guidé dans un alésage (47) aménagé dans la base (17) du corps de soupape (15′) et en ce que le ressort de pression (45) adjoint au piston (46) se trouve en équilibre avec une force agissant sur le piston (46), sur la surface du piston et avec la pression régnant dans l'alésage borgne (22) du tiroir de commande (21).

FIG.1

# FIG.2

FIG. 3